(19) 

**Europäisches Patentamt**
**European Patent Office**
**Office européen des brevets**

(11) **EP 4 148 850 A1**

(12) **EUROPEAN PATENT APPLICATION**
published in accordance with Art. 153(4) EPC

(43) Date of publication:
**15.03.2023 Bulletin 2023/11**

(21) Application number: **21913396.4**

(22) Date of filing: **26.10.2021**

(51) International Patent Classification (IPC):
$H01M\ 10/0565^{(2010.01)}$    $H01M\ 10/0562^{(2010.01)}$

(52) Cooperative Patent Classification (CPC):
**H01M 10/0525; H01M 10/0562; H01M 10/0565; H01M 10/42**

(86) International application number:
**PCT/CN2021/126498**

(87) International publication number:
**WO 2022/142651 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.12.2020 CN 202011643967**

(71) Applicant: **Jiangsu Contemporary Amperex Technology Limited**
**Liyang, Jiangsu 213300 (CN)**

(72) Inventors:
• **HU, Bobing**
**Hangzhou, Jiangsu 213300 (CN)**

• **LIU, Chengyong**
**Hangzhou, Jiangsu 213300 (CN)**
• **FU, Ang**
**Hangzhou, Jiangsu 213300 (CN)**
• **LI, Qian**
**Hangzhou, Jiangsu 213300 (CN)**
• **CHENG, Meng**
**Hangzhou, Jiangsu 213300 (CN)**
• **FU, Jiawei**
**Hangzhou, Jiangsu 213300 (CN)**

(74) Representative: **Rowlands, Stuart Michael et al**
**Maucher Jenkins**
**Seventh Floor Offices**
**Artillery House**
**11-19 Artillery Row**
**London SW1P 1RT (GB)**

(54) **SOLID ELECTROLYTE MEMBRANE, SOLID BATTERY, BATTERY MODULE, BATTERY PACK, AND ELECTRIC DEVICE**

(57) Provided in the present application are a solid electrolyte membrane, a solid battery, a battery module, a battery pack, and a power consuming device. The solid electrolyte membrane comprises a sulfide electrolyte material and polymer particles dispersed in the sulfide electrolyte material; on the basis of 100 parts by mass of the total mass of the sulfide electrolyte material and the polymer particles, the mass of the polymer particles is 1 to 50 parts by mass; and no less than 90 wt% of the polymer particles have a size of 1 $\mu$m to 500 $\mu$m. Once compression-molded in conditions of 100 MPa to 500 MPa, the polymer particles have a compaction density of greater than 95% and a breaking strength of higher than 50 MPa. The mechanical properties of the solid electrolyte membrane can be improved so as to inhibit the propagation of cracks throughout the solid electrolyte membrane, thereby effectively solving the problem of lithium dendrites running throughout the solid electrolyte membrane.

*FIG. 1*

EP 4 148 850 A1

## Description

The present application claims the priority of Chinese patent application No. 2020116439673, entitled "Solid Electrolyte Membrane, Solid Battery and Device" and filed on December 31, 2020, the entire content of which is incorporated herein by reference.

Technical Field

The present application relates to the technical field of electrochemistry, and in particular to a solid electrolyte membrane, a solid battery, a battery module, a battery pack and a power consuming device.

Background Art

In a charging process of a solid battery, continuous deposition of lithium metal leads to a large volume expansion of a negative electrode, and in this case, an internal expansion stress is generated at a negative electrode-electrolyte interface. Under the action of the stress, a sulfide electrolyte is prone to local cracking. Since traditional sulfide electrolytes are similar to ceramic materials, the overall structural toughness thereof is poor, and the cracks formed at the negative electrode interface will propagate rapidly until throughout the entire solid electrolyte membrane. Due to a low stress at the cracks, lithium dendrites formed during the deposition of a lithium metal grow easily along the voids formed at the cracks, and eventually form a physical contact with a positive electrode resulting in an internal short circuit in the battery.

Summary of the Invention

An objective of the present application is to provide a solid electrolyte membrane, a solid battery, a battery module, a battery pack and a power consuming device, in which the mechanical properties of a solid electrolyte membrane are improved so as to inhibit the propagation of cracks through the solid electrolyte membrane, thereby effectively solving the problem of lithium dendrites penetrating through the solid electrolyte membrane.

In a first aspect, the present application provides a solid electrolyte membrane comprising as the raw materials a sulfide electrolyte material and polymer particles dispersed in the sulfide electrolyte material, wherein

based on the total mass of the sulfide electrolyte material and the polymer particles being 100 parts by mass, the mass of the polymer particles is 1 to 50 parts by mass;
no less than 90 wt% of the polymer particles have a size of 1 $\mu$m to 500 $\mu$m, and optionally no less than 35 wt% of the polymer particles have a size of 5 $\mu$m to 20 $\mu$m; and
once compression-molded in conditions of 100 MPa to 500 MPa, the polymer particles have a compaction density of greater than 95% and a breaking strength of higher than 50 MPa.

In the technical solutions of the embodiments of the present application, by adding polymer particles into a sulfide electrolyte material, a composite brick wall structure with the polymer particles dispersed in the sulfide electrolyte material is obtained. By using the polymer particles with a specific particle size and regulating the polymer particles to have specific compacted density and breaking strength under certain compression-molding conditions, at least the following effects are achieved when the amount of the polymer particles reaches a certain standard: on one hand, the polymer particles can effectively improve the toughness of the solid electrolyte membrane, thereby making the solid electrolyte membrane difficult to crack; and on the other hand, the propagation of the cracks generated by a force on the sulfide electrolyte material in the solid electrolyte membrane will be blocked by the polymer particles, thereby effectively avoiding a defect of propagation of the cracks through the solid electrolyte membrane. Thus, a phenomenon of lithium dendrites growing and piercing through the solid electrolyte membrane is effectively inhibited, and a risk of internal short circuits in the battery is reduced.

In some exemplary embodiments, no less than 99 wt% of the polymer particles have a size of 1 $\mu$m to 500 $\mu$m, and optionally no less than 40 wt% of the polymer particles have a size of 5 $\mu$m to 20 $\mu$m; and optionally, no less than 99 wt% of the polymer particles have a size of 5 $\mu$m to 20 $\mu$m. In the embodiments, the size of the polymer particles is better matched with the average particle size of the sulfide electrolyte material, such that the polymer particles and the sulfide electrolyte material have a higher compacted density, and thus the breaking strength of the solid electrolyte membrane and the cycle number of the battery are higher.

In some exemplary embodiments, the polymer particles have an aspect ratio within 50, optionally within 25, and more optionally within 20. In the embodiments, the upper limit of the aspect ratio of the polymer particles being within a certain standard can effectively improve the breaking strength and compacted density of the solid electrolyte membrane, such that the electrical conductivity of the solid electrolyte membrane and the cycle number of the battery are high.

In some exemplary embodiments, the polymer particles are selected from one or more of polysaccharide polymers, polyhydrocarbon polymers, rubber polymers, polyamide polymers and polyester polymers. In the embodiments, the specific types of polymer particles have the specific advantages of meeting the compacted density and breaking strength requirements for the polymer particles under specific pressure conditions, having abundant sources, etc.

In some exemplary embodiments, the polymer particles contain a polar functional group selected from one or more of a hydroxyl group, a carboxyl group and a cyano group. In the embodiments, the polar groups present in the polymer are helpful in forming a chemical bonding interaction with PS groups (phosphorus-sulfur groups) in the sulfide electrolyte material, such that an interface with a good chemical compatibility can be formed between the polymer particles and the sulfide electrolyte material, which is beneficial in improving the two-phase dispersion property and structural stability in the composite brick wall structure, improving the ionic conductivity and breaking strength of the solid electrolyte, and thus improving the capacity utilization and cycle life of the battery.

In some exemplary embodiments, the polymer particles are polysaccharide polymers, and optionally one or more of xanthan gum, guar gum, gum arabic, starch, cellulose, glycogen, chitin, agar and inulin. In the embodiments, the polysaccharide polymer has excellent mechanical properties such that it not only has a high breaking strength, but also, under pressurized conditions, can form a high density structure that has good mechanical matching with the sulfide electrolyte; and a large number of polar functional groups such as a hydroxyl group are also present on its molecular chain, which can form an interface with good chemical compatibility and stability with the sulfide electrolyte. Additionally, the polysaccharide polymers also have the advantages of abundant sources, low cost and the like, which can further reduce the cost of the solid electrolyte and brings excellent application prospects.

In some exemplary embodiments, the polymer particles have a degree of polymerization of 100,000 to 5 million, and optionally 200,000 to 2 million. In the embodiments, the polymer particles with a specific degree of polymerization are selected such that the polymer particles have a suitable mechanical strength, which can effectively improve the overall breaking strength of the solid electrolyte membrane and is beneficial in forming a uniform and dense composite solid electrolyte membrane, thereby effectively improving the electrical conductivity of the solid electrolyte membrane and also the capacity utilization, cycle number and energy density of the battery.

In some exemplary embodiments, the sulfide electrolyte material is selected from one or more of $Li_3PS_4$, $Li_7P_3S_{11}$, $Li_6PS_5Cl$ and $Li_{10}GeP_2S_{12}$. In the embodiments, the specific types of sulfide electrolyte materials can well meet the requirements on use performance, such that the solid electrolyte membrane has a good electrical conductivity, and the battery has a high capacity utilization, cycle number and energy density simultaneously.

In some exemplary embodiments, the solid electrolyte membrane further comprises a binder, wherein based on the total mass of the sulfide electrolyte material and the polymer particles being 100 parts by mass, the mass of the binder is 0.5 to 20 parts by mass, optionally 1 to 10 parts by mass, and more optionally 2 to 5 parts by mass. In the embodiments, the addition of the binder can improve the overall mechanical properties of the solid electrolyte membrane, which is beneficial in ensuring the ability of an ultra-thin solid electrolyte membrane to resist the deformation of the battery electrodes and thus improving the cycle performance of the solid battery. A suitable addition amount of the binder facilitates the formation of an ultra-thin solid electrolyte membrane with a thickness of 50 $\mu$m or less, and also ensures that the solid electrolyte membrane has a good electrical conductivity.

In some exemplary embodiments, the solid electrolyte membrane has a thickness of 20 $\mu$m to 200 $\mu$m. In the embodiments, the solid electrolyte membrane has a suitable thickness, such that the battery can have both a high cycle number and a high energy density.

In a second aspect, the present application provides a solid battery, comprising the solid electrolyte membrane provided in the first aspect.

In a third aspect, the present application provides a battery module, comprising the solid battery provided in the second aspect.

In a fourth aspect, the present application provides a battery pack, comprising the battery module provided in the third aspect.

In a fifth aspect, the present application provides a power consuming device, comprising the solid battery provided in the second aspect or the battery module provided in the third aspect or the battery pack provided in the fourth aspect.

Brief Description of the Drawings

In order to more clearly explain the technical solutions of the embodiments of the present application, the drawings being used in the embodiments will be described briefly below. It should be understood that the following drawings illustrate only some embodiments of the present application and are therefore not to be considered as a limitation on the scope thereof. For those of ordinary skill in the art, other relevant drawings can also be obtained from these drawings without any creative effort.

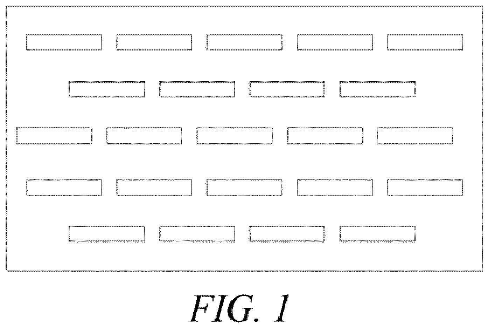

Fig. 1 is a schematic diagram of an organizational structure of a solid electrolyte membrane of a composite brick wall structure provided in embodiments of the present application.

Detailed Description of Embodiments

In order to make the objectives, technical solutions and advantages of the embodiments of the present application clearer, the technical solutions in the embodiments of the present application will be described clearly and fully below. The specific conditions that are not specified in examples are according to conventional conditions or the conditions recommended by the manufacturer. The reagents or instruments used, if they are not marked with the manufacturer, are common products that are commercially available.

It should be noted that, "and/or" in the present application, such as "feature 1 and/or feature 2", refers to three cases of "feature 1" alone, "feature 2" alone and "feature 1" plus "feature 2".

In addition, in the description of the present application, unless otherwise specified, the meaning of "more" in "one or more" refers to two or more; a range of "numerical value $a$ to numerical value $b$" includes both endpoint values of "$a$" and "$b$"; and descriptions such as "no less than numerical value $c$" and "within numerical value $c$" all mean that the numerical value c itself is included.

The following provides exemplary description of a solid electrolyte membrane, a solid battery, a battery module, a battery pack and a power consuming device according to embodiments of the present application.

In a first aspect, the present application provides a solid electrolyte membrane. The solid electrolyte membrane comprises a sulfide electrolyte material and polymer particles dispersed in the sulfide electrolyte material. Based on the total mass of the sulfide electrolyte material and the polymer particles being 100 parts by mass, the mass of the polymer particles is 1 to 50 parts by mass. Herein, no less than 90 mass percentage (wt%) of the polymer particles (particles with a mass fraction of no less than 90% in the polymer particles) have a size of 1 $\mu$m to 500 $\mu$m; and after the polymer particles are compression-molded under the conditions of 100 MPa to 500 MPa, the compacted density is greater than 95% and the breaking strength is higher than 50 MPa.

In the solid electrolyte membrane of the present application, the polymer particles with a size of mainly 1 $\mu$m to 500 $\mu$m are easier to disperse uniformly; and the size of the polymer particles is well matched with the average particle size (5 $\mu$m to 20 $\mu$m) of the sulfide electrolyte material, such that the solid electrolyte membrane can maintain a high compacted density, and thus can effectively maintain an interface contact and an ion transport channel between the sulfide electrolyte material and the polymer particles, which is beneficial in maintaining the electrochemical properties of the solid electrolyte membrane such as a good electrical conductivity and a high breaking strength. Moreover, the solid battery can better combine a high capacity utilization, a high energy density and a high cycle number. If the range of size distribution of the polymer particles is too large and cannot satisfy a condition that no less than 90 wt% of the polymer particles have a size of 1 $\mu$m to 500 $\mu$m, the polymer particles will be difficult to disperse uniformly and are poorly matched with the average particle size of the sulfide electrolyte material, which will cause a degradation of the overall performance of the battery. It should be noted that, in the embodiments of the present application, for a size range of the polymer particles that satisfy a specific condition, the lower limit thereof refers to the minimum size of all of the polymer particles that satisfy the specific condition, and the upper limit thereof refers to the maximum size of all of the polymer particles that satisfy the specific condition.

During screening through a double sieve, most of the particles can be controlled within a suitable particle size interval range. For example, 95 wt% of the particles can be well controlled within a target particle size interval range. As an example, no less than 95 wt% of the polymer particles have a size of 1 $\mu$m to 500 $\mu$m, such that more polymer particles have a size distribution in the range of 1 $\mu$m to 500 $\mu$m.

Considering that the better the matching between the size of the polymer particles and the average particle size of the sulfide electrolyte material, the higher the compacted density of the polymer particles and the sulfide electrolyte material, and then the better a interfacial contact and an ion transport channel between the sulfide electrolyte material and the polymer particles can be maintained, while inhibiting the growth of lithium dendrites along the internal pores of the electrolyte, such that the breaking strength of the solid electrolyte membrane and the cycle number of the battery are higher, in the embodiments of the present application, the sizes of the polymer particles are optionally concentrated towards 5 $\mu$m to 20 $\mu$m.

In some embodiments, no less than 90 wt% of the polymer particles have a size of 1 $\mu$m to 500 $\mu$m and, optionally, no less than 35 wt% of the polymer particles have a size of 5 $\mu$m to 20 $\mu$m.

In an exemplary embodiment, no less than 99 wt% of the polymer particles have a size of 1 $\mu$m to 500 $\mu$m and, optionally, no less than 40 wt% of the polymer particles have a size of 5 $\mu$m to 20 $\mu$m.

In an exemplary embodiment, no less than 99 wt% of the polymer particles have a size of 2 $\mu$m to 100 $\mu$m and, optionally, no less than 55 wt% of the polymer particles have a size of 5 $\mu$m to 20 $\mu$m.

As an example, no less than 99 wt% of the polymer particles have a size of 5 $\mu$m to 20 $\mu$m.

In some exemplary embodiments, no less than 99 wt% of the polymer particles have a size in, for example, but not limited to a range between any two of 1 $\mu$m , 2 $\mu$m , 5 $\mu$m, 10 $\mu$m, 20 $\mu$m, 50 $\mu$m, 100 $\mu$m, 200 $\mu$m, and 500 $\mu$m.

As an example, the polymer particles of a target size can be obtained by means of sieving. For example, in order to obtain polymer particles of which no less than 99 wt% have a size of 1 $\mu$m to 500 $\mu$m, the polymer particles can be sieved through a 32-mesh sieve, the undersize particles are taken and then sieved through a 10,000-mesh sieve, and the oversize particles are taken, which are the target particles; in order to obtain polymer particles of which no less than 99 wt% have a size of 2 $\mu$m to 100 $\mu$m, the polymer particles can be sieved through a 150-mesh sieve, the undersize particles are taken and then sieved through a 5000-mesh sieve, and the oversize particles are taken, which are the target particles; and in order to obtain polymer particles of which no less than 99 wt% have a size of 5 $\mu$m to 20 $\mu$m, the polymer particles can be sieved through a 600-mesh sieve, the undersize particles are taken and then sieved through a 2000-mesh sieve, and the oversize particles are taken, which are the target particles.

Considering that when the content of the polymer particles is too low, the polymer particles can only be dispersed sporadically in some regions of the solid electrolyte membrane, resulting in a limited improvement of the overall breaking strength of the solid electrolyte membrane, controlling the lower limit of the amount of the polymer particles to reach a certain standard can effectively improve the overall breaking strength of the solid electrolyte membrane and improve the crack resistance of the solid electrolyte membrane, thereby effectively increasing the maximum cycle number of the battery.

Additionally, considering that the polymer particles themselves cannot conduct lithium ions, and when the content of the polymer particles is too high, the ion transport ability inside the solid electrolyte membrane will be affected greatly, such that the electrical conductivity of the solid electrolyte membrane and the capacity utilization and energy density of the battery will be all significantly reduced, controlling the upper limit of the amount of the polymer particles within a certain standard can balance the performance requirements on the electrical conductivity of the solid electrolyte membrane and the capacity utilization and energy density of the battery.

In some exemplary embodiments, based on the total mass of the sulfide electrolyte material and the polymer particles being 100 parts by mass, in the range of 1 to 50 parts by mass, the mass of the polymer particles is further optionally 5 to 50 parts by mass, or 5 to 35 parts by mass, or 10 to 35 parts by mass, or 10 to 20 parts by mass, and is, for example, but not limited to any one of or a range between any two of 1 part by mass, 2 parts by mass, 5 parts by mass, 10 parts by mass, 15 parts by mass, 20 parts by mass part, 25 parts by mass, 30 parts by mass, 35 parts by mass, 40 parts by mass, 45 parts by mass, or 50 parts by mass.

Additionally, since the amount of the sulfide electrolyte material will affect the electrical conductivity of the solid electrolyte membrane and the capacity of the battery, based on the total mass of the sulfide electrolyte material and the polymer particles being 100 parts by mass, the mass of the sulfide electrolyte material is not less than 50 parts by mass to ensure that the material has suitable electrical conductivity and battery capacity.

In the embodiments of the present application, the compression-molding conditions of 100 MPa to 500 MPa are approximate to the molding pressure of the solid electrolyte membrane; as an example, the compression-molding pressure is optionally 200 MPa to 400 MPa, for example, 300 MPa. The compacted density of the polymer particles under certain compression-molding conditions is selected by considering that an external pressure is required to achieve densification in the preparation of a solid electrolyte membrane. The selection of the polymer particles that can be densely molded under specific pressure conditions can be compatible with the preparation process of a sulfide electrolyte material, thereby reducing the manufacturing cost of a solid electrolyte membrane of the composite system, and can also increase the degree of densification of the solid electrolyte membrane of the composite system, reduce the pores generated during the processing, increase the ionic conductivity of the solid electrolyte membrane, and inhibit the growth of lithium dendrites along the internal pores, thereby improving the composite effect between the sulfide electrolyte material and the polymer particles. The breaking strength of the polymer particles under certain compression-molding conditions is selected by considering that when the polymer particles themselves have a certain mechanical strength, a stable geometric shape of the polymer particles can be effectively maintained. When the mechanical strength of the polymer particles is too low, the polymer particles are prone to deformation defects under the action of a local stress, and are difficult to effectively inhibit the propagation of cracks, so that the composite brick wall structure cannot play the function of inhibiting the penetrating defects well.

In the present application, by adding polymer particles into a sulfide electrolyte material, a composite brick wall structure with the polymer particles dispersed in the sulfide electrolyte material is obtained. The composite brick wall structure is shown in Fig. 1, where the sulfide electrolyte material constitutes a wall structure, and the polymer particles constitute a brick structure. In the composite system, by using the polymer particles with a specific particle size and also regulating the polymer particles to have specific compacted density and breaking strength under certain compression-molding conditions, under the joint action of the specific polymer particles and the sulfide electrolyte material: on one hand, the polymer particles can effectively improve the toughness of the solid electrolyte membrane, thereby making the solid electrolyte membrane difficult to crack; and on the other hand, the propagation of the cracks generated by a force on the sulfide electrolyte material in the solid electrolyte membrane will be blocked by the polymer particles, thereby effectively avoiding a defect of propagation of the cracks throughout the solid electrolyte membrane.

In the embodiments of the present application, controlling the particle size, amount, compacted density and breaking strength of the polymer particles according to specific conditions enables the solid electrolyte membrane to have a high compacted density and breaking strength, such that a phenomenon of lithium dendrites growing and piercing through the solid electrolyte membrane is effectively inhibited, and a risk of internal short circuits in the battery is reduced.

In some embodiments, the solid electrolyte membrane is compression-molded under the conditions of 100 MPa to 500 MPa, and optionally 200 MPa to 400 MPa, for example, 300 MPa. The compacted density of the solid electrolyte membrane is greater than 79%, or greater than 84%, or greater than 90%, or greater than 95%; and the breaking strength of the solid electrolyte membrane is higher than 40 MPa, or higher than 50 MPa, or higher than 60 MPa, or higher than 70 MPa, or higher than 80 MPa, or higher than 90 MPa, or higher than 100 MPa.

It should be noted that, in the description of the present application, a first material being dispersed in a second material means that the second material is used as a medium for discrete distribution of the first material such that the first material is in a discretely distributed state in the second material.

Considering that the morphology of the polymer particles will affect the dispersion of the polymer particles in the solid electrolyte membrane and the mechanical properties of the polymer particles themselves as well as the interface contact between the polymer particles and the sulfide electrolyte material, the polymer particles with specific morphology requirements are selected, which is beneficial in improving the compacted density and breaking strength of the solid electrolyte membrane.

Studies have found that among the morphological characteristics of the polymer particles, the aspect ratio of the polymer particles has a significant effect on the compacted density and breaking strength of the solid electrolyte membrane. The polymer particles need to approach a micron size in order to maintain a sufficient mechanical strength and effectively inhibit the piercing of lithium dendrites and the propagation of cracks. When the aspect ratio of polymer particles is too large, the particle sizes in some regions are inevitably too small (nanoscale), and it is difficult to effectively achieve an effect of inhibiting the propagation of cracks and improving the breaking strength of the solid electrolyte membrane, which is not beneficial in increasing the cycle number of the battery. Moreover, the polymer particles with an excessive aspect ratio are more prone to a local winding structure, resulting in some residual pores, which is not beneficial in improving the compacted density of the solid electrolyte membrane in a compression-molding process, resulting in a decrease in the electrical conductivity of the solid electrolyte membrane.

In some exemplary embodiments, the aspect ratio of the polymer particles should be controlled within 50, optionally within 25, and more optionally within 20, and is, for example, but not limited to 20, 15, 10 or 5. An excessive aspect ratio will reduce the overall mechanical strength of the solid electrolyte membrane, which will eventually reduce the cycle performance of the battery.

In order to better meet the requirements on the compacted density and breaking strength of the polymer particles under specific pressure conditions, in some exemplary embodiments, the polymer particles are selected from one or more of polysaccharide polymers, polyhydrocarbon polymers, rubber polymers, polyamide polymers and polyester polymers.

Studies have also found that, the polar groups present in the polymer are helpful in forming a chemical bonding interaction with PS groups in the sulfide electrolyte material, such that an interface with a good chemical compatibility can be formed between the polymer particles and the sulfide electrolyte material, which is beneficial in improving the two-phase dispersion property and structural stability in the composite brick wall structure, improving the ionic conductivity and breaking strength of the solid electrolyte, and thus improving the capacity utilization and cycle life of the battery.

By way of example, the polymer particles contain a polar functional group selected from one or more of a hydroxyl group, a carboxyl group and a cyano group.

As an example, the polymer particles are polysaccharide polymers, and further optionally one or more of xanthan gum, guar gum, gum arabic, starch, cellulose, glycogen, chitin, agar and inulin. The polysaccharide polymer has excellent mechanical properties such that it not only has a high breaking strength, but also can form a high density structure under pressurized conditions, which have good mechanical matching with the sulfide electrolyte; and a large number of polar functional groups, such as a hydroxyl group, are also present on its molecular chain, which can form an interface with good chemical compatibility and stability with the sulfide electrolyte. Further, the polysaccharide-based polymers also have the advantages of abundant sources, low cost and the like, which can further reduce the cost of the solid electrolyte and brings excellent application prospects.

Considering that the degree of polymerization of the polymer particles affects the mechanical properties of the polymer particles, the polymer particles need to have a suitable degree of polymerization. When the degree of polymerization of the polymer particles is too low, the polymer has a short molecular chain and a soft texture, such that the mechanical strength of the polymer particles is low, the overall breaking strength of the solid electrolyte membrane is improved to a limited degree, and it is difficult to effectively inhibit the growth of lithium dendrites and the propagation of crack defects in the electrolyte. When the degree of polymerization of the polymer particles is too high, the mechanical strength is high. Studies have also found that, when the mechanical strength of the polymer particles is too high, the mechanical properties of the polymer particles and the sulfide electrolyte material are poorly matched, so that a point-to-point contact is easily formed between the polymer particles and the sulfide electrolyte material, and it is difficult to form a good physical contact between the two-phase interfaces of the sulfide electrolyte material and the polymer particles.

In some exemplary embodiments, the polymer particles have a degree of polymerization of 100,000 to 5 million, or 200,000 to 2 million, or 400,000 to 1 million, for example, but not limited to any one or a range between any two of 100,000, 200,000, 400,000, 700,000, 1 million, 2 million and 5 million.

When the mechanical strength of the polymer is too high, on one hand, it is not beneficial in forming a uniform and dense composite solid electrolyte membrane, and will also degrade the overall mechanical strength of the composite solid electrolyte membrane; and on the other hand, it is very likely to increase the polarization of the two-phase interfaces, such that the electrical conductivity of the solid electrolyte membrane and the capacity utilization, cycle number and energy density of the battery are all reduced.

It can be understood that, among the raw materials for preparing a solid electrolyte membrane of the present application, the sulfide electrolyte material can be a material type well known in the art. Considering that the electrical conductivity of the solid electrolyte membrane and the capacity utilization, cycle number and energy density and the like of the battery will vary due to a difference in the properties of the sulfide electrolyte material, optionally, the sulfide electrolyte material is selected from one or more of $Li_3PS_4$, $Li_7P_3S_{11}$, $Li_6PS_5Cl$ and $Li_{10}GeP_2S_{12}$.

It can be understood that, in the solid electrolyte membrane of the present application, the solid electrolyte membrane may be composed of the above sulfide electrolyte material and polymer particles, and the raw materials of the solid electrolyte membrane may also comprise an additive.

Studies have found that, since many hard contacts exist between the sulfide electrolyte material and the polymer particles of the above specific requirements, it is difficult for the solid electrolyte membrane to undergo a large deformation under the action of a preparation pressure. When the battery electrodes expand greatlly, a problem of residual stress or uneven stress will occur locally, resulting in a risk of structural damage of the solid electrolyte membrane of the composite brick wall structure. Considering that reducing the thickness of the solid electrolyte membrane is beneficial in improving the energy density of the battery, however experiments have found that once the thickness of the solid electrolyte membrane is reduced to a certain value, the cycle performance of the battery will be degraded, in order to balance the requirements of energy density and cycle performance, the solid electrolyte membrane needs to have a suitable thickness.

In some exemplary embodiments, the solid electrolyte membrane has a thickness of 20 $\mu$m to 200 $\mu$m, and in this range, the battery can have both a high cycle number and a high energy density.

In an embodiment where the solid electrolyte membrane is only composed of the above sulfide electrolyte material and polymer particles, further studies have found that when the solid electrolyte membrane has a thickness of 100 $\mu$m or more, the cycle number of the battery is significantly higher; and when the solid electrolyte membrane has a thickness of 100 $\mu$m or less, particularly 50 $\mu$m or less, the energy density of the battery is significantly higher.

Studies have further found that, adding a binder into the solid electrolyte membrane can improve the deformation ability of the solid electrolyte membrane under the action of a preparation pressure, which can thus better alleviate the local stress caused by the volume expansion of the battery electrodes and maintain the structural stability of the solid electrolyte membrane. Therefore, the addition of the binder can improve the overall mechanical properties of the solid electrolyte membrane, which is beneficial in ensuring the ability of an ultra-thin solid electrolyte membrane with a thickness of 50 $\mu$m or less to resist the deformation of the battery electrodes, thereby improving the cycle performance of the solid battery.

In some exemplary embodiments, the solid electrolyte membrane further comprises a binder dispersed in the solid electrolyte membrane in the form of filaments.

Considering the low ionic conductivity of the binder and the impact of the binder on the film-forming property of the solid electrolyte membrane, the binder needs to be added in a suitable amount. When the amount of the binder is too small, it is difficult to form a film to obtain an ultra-thin solid electrolyte membrane; and when the amount of the binder is too large, excessive binder will cause the surface of the sulfide electrolyte material to be coated with the binder, which will affect the migration of lithium ions at the interface and thus lead to a significant decrease in the electrical conductivity of the solid electrolyte membrane, such that the solid state electrolyte membrane cannot well meet the requirements of electrical conductivity of the battery in use.

As an example, based on the total mass of the sulfide electrolyte material and the polymer particles being 100 parts by mass, the mass of the binder is 0.5 to 20 parts by mass, or 1 to 10 parts by mass, or 2 to 5 parts by mass, for example, but not limited to any one of or a range between any two of 0.5 part by mass, 1 parts by mass, 2 parts by mass, 4 parts by mass, 5 parts by mass, 6 parts by mass part, 8 parts by mass and 10 parts by mass.

In an embodiment where the solid electrolyte membrane also comprises a binder of the above addition amount, further studies have found that when the solid electrolyte membrane has a thickness of 30 $\mu$m or more, the cycle number of the battery is significantly higher; and when the solid electrolyte membrane has a thickness of 100 $\mu$m or less, particularly 50 $\mu$m or less, the energy density of the battery is significantly higher.

By way of example, the solid electrolyte membrane has a thickness of 30 μm to 50 μm, for example, but not limited to any one of or a range between any two of 30 μm, 35 μm, 40 μm, 45 μm, and 50 μm, and in this range, the solid electrolyte membrane is in an ultra-thin state and has both a high cycle number and a high energy density.

It can be understood that, in the solid electrolyte membrane of the present application, the binder can be a material type well known in the art. Considering that the structure and morphology of the binder will affect the dispersion state of the materials inside the solid electrolyte membrane and thus cause a certain impact on the mechanical properties and electrochemical properties of the solid battery, optionally, the binder is selected from one or more of polyethylene, polyethylene oxide, polyvinylidene fluoride, polypropylene, polyisobutylene, styrene-butadiene rubber and nitrile-butadiene rubber.

In addition, the solid electrolyte membrane provided in the embodiments of the present application can be prepared by a method well known in the art. As an example, in an embodiment where the solid electrolyte membrane is composed of a sulfide electrolyte material and polymer particles, the solid electrolyte membrane is prepared using a dry process; and in an embodiment where the solid electrolyte membrane is composed of a sulfide electrolyte material, polymer particles and a binder, the solid electrolyte membrane is prepared using a wet process.

In some exemplary embodiments, the dry process comprises: mixing the sulfide electrolyte material and the polymer particles to obtain a composite raw material powder; and compression-molding the composite raw material powder at a specific operating pressure. The operating pressure is optionally 100 MPa to 500 MPa, or 200 MPa to 400 MPa, for example, 300 MPa.

In some exemplary embodiments, the wet process comprises: mixing the sulfide electrolyte material and the polymer particles to obtain an electrolyte powder; dissolving the binder in an organic solvent to obtain a binder solution; dispersing the electrolyte powder in the binder solution to obtain a dispersed composite raw material slurry; and applying the dispersed composite raw material slurry to a substrate to form a coating with a specific thickness, and then drying the coating through vacuum heat treatment.

In the wet process, the binder is soluble in the organic solvent, and the sulfide electrolyte material and the polymer particles are insoluble in the organic solvent, such that the binder, the sulfide electrolyte material and the polymer particles can each function effectively.

Optionally, the organic solvent is selected from one or more of toluene, xylene, trimethylbenzene, n-heptane, cyclohexane, ethyl acetate and butyl butyrate.

As an example, the organic solvent is one or more of toluene, xylene or trimethylbenzene, the binder is styrene-butadiene rubber and/or polyisobutylene, and the polymer particles are xanthan gum and/or guar gum.

As another example, the organic solvent is ethyl acetate and/or butyl butyrate, the binder is polyethylene oxide and/or polyvinylidene fluoride, and the polymer particles are cellulose and/or chitin.

In a second aspect, the present application provides a solid battery, comprising the solid electrolyte membrane provided in the first aspect.

A positive electrode material in the solid battery comprises a positive electrode active material, a conductive agent and a second binder. Herein, the positive electrode active material is optionally one or more of lithium cobalt oxides, lithium nickel oxides, lithium manganese oxides, lithium nickel manganese oxides, lithium nickel cobalt manganese oxides, lithium nickel cobalt aluminum oxides and lithium containing phosphates of an olivine structure. In an exemplary embodiment, the positive electrode active material is one or more of $LiCoO_2$, $LiNiO_2$, $LiMnO_2$, $LiMn_2O_4$, $Li_6PS_5Cl$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), $LiNi_{0.85}Co_{0.15}Al_{0.05}O_2$, $LiFePO_4$ (LFP) and $LiMnPO_4$. The conductive agent is optionally one or more of acetylene black, conductive carbon black, carbon fibers, carbon nanotubes and Ketjen black. The second binder is optionally one or more of polyvinylidene fluoride and modified derivatives (e.g., modified with carboxylic acid, acrylic acid, acrylonitrile, etc.) of polyvinylidene fluoride.

In some embodiments, the solid battery provided by the present application can be assembled into a battery module, the number of the solid batteries contained in the battery module may be more than one, and the specific number can be adjusted according to the application scenarios and capacity requirements of the battery module.

The above battery module can also be assembled into a battery pack, and the number of the battery modules contained in the battery pack can be adjusted according to the application scenarios and capacity requirements of the battery pack.

In a third aspect, the present application provides a battery module, comprising the solid battery provided in the second aspect.

In a fourth aspect, the present application provides a battery pack, comprising the battery module provided in the third aspect.

In a fifth aspect, the present application provides a power consuming device, comprising a solid battery provided in the second aspect or a battery module provided in the third aspect or a battery pack provided in the fourth aspect, the solid battery or the battery module or the battery pack providing a power source for the power consuming device.

In the embodiments of the present application, the power consuming device may be, but is not limited to, a mobile communication terminal (e.g., a mobile phone, a laptop computer, a tablet computer, a POS machine, a on-board computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship and satellite, an energy storage system, and the like.

It can be understood that for the power consuming device, a solid battery, a battery module or a battery pack can be selected according to usage requirements.

The features and performances of the present application will be further described in detail below with reference to examples.

The solid batteries of the examples and comparative examples are prepared and tested according to the following methods.

1. Preparation of solid battery

(1) Preparation of solid electrolyte membrane

Herein, a dry process is used for examples without a binder, and a wet process is used for examples with a binder.

The dry process comprises:

S11. A polymer powder was screened through a sieve with a specific mesh number, to obtain polymer particles with a specific size.

S12. The polymer particles obtained in the step S11 were mixed with a sulfide electrolyte material powder in a ratio of specific parts by mass to achieve dry pre-dispersion, to obtain a pre-dispersed powder.

S13. The pre-dispersed powder obtained in the step S12 was uniformly dispersed by a ball-milling treatment, to obtain a composite raw material powder.

S14. The composite raw material powder obtained in step S13 was compression-molded at an operating pressure of 300 MPa, to obtain a solid electrolyte membrane with a specific thickness.

The wet process comprises:

S21. A polymer was screened through a sieve with a specific mesh number, to obtain polymer particles with a specific size.

S22. The polymer particles obtained in the step S21 were mixed with a sulfide electrolyte material powder in a ratio of specific parts by mass to achieve dry pre-dispersion, to obtain a pre-dispersed powder.

S23. A binder of specific parts by mass was dissolved in an organic solvent to form a uniformly dispersed binder solution.

S24. The pre-dispersed powder obtained in the step S22 and the binder solution obtained in the step S23 were mixed in a ratio, and dispersed by ball milling to form a uniform composite electrolyte slurry.

S25. The composite electrolyte slurry in the step S24 was applied to a substrate, where the thickness of the applied electrolyte slurry layer was controlled by changing the scraper size, and then the applied slurry was dried through vacuum heat treatment, to obtain a solid electrolyte membrane with a specific thickness.

(2) Preparation of positive electrode plate

S31. A positive electrode active material $LiNi_{1/3}Co_{1/3}Mn_{1/3}O_2$, an electrolyte material $Li_6PS_5Cl$, a conductive agent Super-P and a binder styrene-butadiene rubber were mixed in a mass ratio of 70:24:3:3, to obtain a mixture.

S32. The mixture obtained in the step S31 was added into a toluene solvent, and stirred under the action of a vacuum mixer until the system was homogeneous, to obtain a positive electrode slurry.

S33. The positive electrode slurry obtained in the step S32 was applied uniformly to both surfaces of a positive electrode current collector aluminum foil, dried at room temperature and transferred to an oven for further drying, followed by cold pressing and slitting, to obtain a positive electrode plate.

(3) Preparation of negative electrode plate

A lithium foil was attached by roll pressing to both surfaces of a negative electrode current collector copper foil, followed by slitting, to obtain a negative electrode plate.

(4) Preparation of full battery

The positive electrode plate, the solid electrolyte membrane and the lithium metal negative electrode prepared by the above preparation methods were stacked in sequence and pressed under 300 MPa, to prepare an all-solid lithium metal battery.

2. Test of performance parameters

Test on raw materials:

(1) Test of the size of polymer particles: The polymer particles were uniformly dispersed on a surface of a conductive tape, and the polymer particle samples in no less than 3 areas were observed with a scanning electron microscope. The statistical result of the particle sizes of not less than 50 polymer particles was taken as the average size of the polymer particle samples.

Test on product:

(2) Test of electrical conductivity: The solid electrolyte membrane was pressed into a disc under a pressure of 300 MPa, and the ohmic impedance of the electrolyte disc was measured on a Chenhua electrochemical workstation. In the test, an ambient temperature was 25°C, a frequency range was 1 Hz to 1 MHz, and a perturbation signal was 5 millivolts (mV). From the impedance, thickness and area of the electrolyte disc, the ionic conductivity was calculated.
(3) Test of compacted density: The solid electrolyte membrane or polymer particles were pressed into a disc under a pressure of 300 MPa, and the compacted porosity w of the electrolyte disc was measured using a true density meter. Herein, the compacted density was 1-w.
(4) Test of breaking strength: The material was pressed into a disc under a pressure of 300 MPa, and a stress change in a breaking process of the disc sample when pierced under a probe pressure was measured using a tension tester. From an ultimate breaking stress $F$, a sample thickness $d$, a sample diameter $R$ and a spacing s of a sample holder, a corresponding breaking strength $E$ was calculated, $E = \dfrac{3Fs}{2Rd^2}$.

(5) Test of maximum tensile strain: The solid electrolyte membrane was pressed into a bar-shaped sample under a pressure of 300 MPa, and a deformation of the bar-shaped sample with a tensile stress on both sides was measured using a tension tester. A ratio of the deformation $x$ when the sample was broken to the initial length $L$ of the sample was the maximum tensile strain, namely, $x/L$.
(6) Test of capacity utilization: The capacity performance of the solid battery was measured using a Land tester. In the test, a working temperature was 25°C, a charge-discharge rate was 0.1 rate (C), and a cut-off voltage was 2.8 volts (V) to 4.2 V.
(7) Test of cycle performance: The battery charge-discharge cycle capacity of the solid battery was measured using a Land tester. In the test, a working temperature was 25°C, a charge-discharge rate was 0.1C, and a cut-off voltage was 2.8 V to 4.2 V. The cycle number when the battery was short-circuited or the cycle capacity was lower than 50% of the first-cycle capacity was taken as the maximum cycle number of the battery.
(8) Test of energy density: The energy released by a cell of the solid battery in a first-cycle charge and discharge process was measured using a Land tester, and the energy was divided by the weight of the cell, as the energy density in watt-hours per kilogram (Wh/kg). In the test, a working temperature was 25°C, a charge-discharge rate was 0.1C, and a cut-off voltage was 2.8 V to 4.2 V.

The composition of the solid electrolyte membrane of the solid battery is shown in Table 1, in which the mass of the sulfide electrolyte material, the mass of the polymer and the mass of the binder are all in parts by mass converted based on the total mass of the sulfide electrolyte material and the polymer particles being 100 parts by mass, hereinafter referred to as converted parts by mass; and the test results of the performance of the solid battery are shown in Table 2, specifically as follows:

Table 1.1 Compositions of solid electrolyte membranes in examples and comparative examples

| | Sulfide electrolyte material | | Polymer particles | | | | | | | | | | |
|---|---|---|---|---|---|---|---|---|---|---|---|---|---|
| | | | | | Proportion of size distribution interval (wt%) | | | | Performance | | | | |
| | Type | Converted parts by mass | Type | Converted parts by mass | 5-20 $\mu$m | 2-5 $\mu$m 20-100 $\mu$m | 1-2 $\mu$m 100-500 $\mu$m | 0.5-1 $\mu$m 500-2,000 $\mu$m | Degree of polymerization (10,000) | Length-diameter ratio | Compacted density (%) | Breaking strength (MPa) |
| Example 1 | $Li_6PS_5Cl$ | 80 | Xanthan Gum | 20 | 35 | 33 | 22 | 10 | 100 | 10 | 97.1 | 210 |
| Example 2 | $Li_6PS_5Cl$ | 80 | Xanthan Gum | 20 | 40 | 35 | 24 | 1 | 100 | 10 | 97.1 | 210 |
| Example 3 | $Li_6PS_5Cl$ | 80 | Xanthan Gum | 20 | 55 | 44 | 1 | | 100 | 10 | 97.1 | 210 |
| Example 4 | $Li_6PS_5Cl$ | 80 | Xanthan Gum | 20 | 99 | 1 | | | 100 | 10 | 97.1 | 210 |
| Example 5 | $Li_6PS_5Cl$ | 99 | Xanthan Gum | 1 | 99 | 1 | | | 100 | 10 | 97.1 | 210 |
| Example 6 | $Li_6PS_5Cl$ | 95 | Xanthan Gum | 5 | 99 | 1 | | | 100 | 10 | 97.1 | 210 |
| Example 7 | $Li_6PS_5Cl$ | 90 | Xanthan Gum | 10 | 99 | 1 | | | 100 | 10 | 97.1 | 210 |
| Example 8 | $Li_6PS_5Cl$ | 65 | Xanthan Gum | 35 | 99 | 1 | | | 100 | 10 | 97.1 | 210 |
| Example 9 | $Li_6PS_5Cl$ | 50 | Xanthan Gum | 50 | 99 | 1 | | | 100 | 10 | 97.1 | 210 |
| Example 10 | $Li_6PS_5Cl$ | 80 | Xanthan Gum | 20 | 99 | 1 | | | 1 | 10 | 95.2 | 66 |
| Example 11 | $Li_6PS_5Cl$ | 80 | Xanthan Gum | 20 | 99 | 1 | | | 10 | 10 | 95.5 | 89 |
| Example 12 | $Li_6PS_5Cl$ | 80 | Xanthan Gum | 20 | 99 | 1 | | | 20 | 10 | 95.9 | 137 |

| | Sulfide electrolyte material | | Polymer particles | | | | | | | | | |
| | Type | Converted parts by mass | Type | Converted parts by mass | Proportion of size distribution interval (wt%) | | | | Performance | | | |
| | | | | | 5-20 μm | 2-5 μm 20-100 μm | 1-2 μm 100-500 μm | 0.5-1 μm 500-2,000 μm | Degree of polymerization (10,000) | Length-diameter ratio | Compacted density (%) | Breaking strength (MPa) |
| Example 13 | Li$_6$PS$_5$Cl | 80 | Xanthan Gum | 20 | 99 | 1 | | | 40 | 10 | 96.4 | 186 |
| Example 14 | Li$_6$PS$_5$Cl | 80 | Xanthan Gum | 20 | 99 | 1 | | | 200 | 10 | 97.6 | 267 |
| Example 15 | Li$_6$PS$_5$Cl | 80 | Xanthan Gum | 20 | 99 | 1 | | | 500 | 10 | 97.4 | 293 |
| Example 16 | Li$_6$PS$_5$Cl | 80 | Xanthan Gum | 20 | 99 | 1 | | | 1,000 | 10 | 96.3 | 322 |
| Example 17 | Li$_3$PS$_4$ | 80 | Xanthan Gum | 20 | 99 | 1 | | | 100 | 10 | 97.1 | 210 |
| Example 18 | Li$_7$P$_3$S$_{11}$ | 80 | Xanthan Gum | 20 | 99 | 1 | | | 100 | 10 | 97.1 | 210 |
| Example 19 | Li$_{10}$GeP$_2$S$_{12}$ | 80 | Xanthan Gum | 20 | 99 | 1 | | | 100 | 10 | 97.1 | 210 |
| Example 20 | Li$_6$PS$_5$Cl | 80 | Guar Gum | 20 | 99 | 1 | | | 100 | 10 | 98.3 | 235 |
| Example 21 | Li$_6$PS$_5$Cl | 80 | Chitin | 20 | 99 | 1 | | | 100 | 10 | 96.5 | 208 |
| Example 22 | Li$_6$PS$_5$Cl | 80 | Polypropylene carbona te | 20 | 99 | 1 | | | 100 | 10 | 96.8 | 180 |
| Example 23 | Li$_6$PS$_5$Cl | 80 | Polycya noacryl ate | 20 | 99 | 1 | | | 100 | 10 | 95.6 | 176 |

(continued)

| | Sulfide electrolyte material | | Polymer particles | | | | | | | | Performance | |
|---|---|---|---|---|---|---|---|---|---|---|---|---|
| | Type | Converted parts by mass | Type | Converted parts by mass | Proportion of size distribution interval (wt%) 5-20 μm | 2-5 μm 20-100 μm | 1-2 μm 100-500 μm | 0.5-1 μm 500-2,000 μm | Degree of polymerization (10,000) | Length-diameter ratio | Compacted density (%) | Breaking strength (MPa) |
| Example 24 | Li$_6$PS$_5$Cl | 80 | Polyethylene terephthalate | 20 | 99 | | 1 | | 100 | 10 | 95.8 | 169 |
| Example 25 | Li$_6$PS$_5$Cl | 80 | Polystyrene | 20 | 99 | | 1 | | 100 | 10 | 95.3 | 171 |
| Example 26 | Li$_6$PS$_5$Cl | 80 | Neoprene | 20 | 99 | | 1 | | 100 | 10 | 96.4 | 173 |
| Example 27 | Li$_6$PS$_5$Cl | 80 | Polyacrylamide | 20 | 99 | | 1 | | 100 | 10 | 95.5 | 160 |
| Example 28 | Li$_6$PS$_5$Cl | 80 | Xanthan Gum | 20 | 99 | | 1 | | 100 | 10 | 97.1 | 210 |
| Example 29 | Li$_6$PS$_5$Cl | 80 | Xanthan Gum | 20 | 99 | | 1 | | 100 | 10 | 97.1 | 210 |
| Example 30 | Li$_6$PS$_5$Cl | 80 | Xanthan Gum | 20 | 99 | | 1 | | 100 | 10 | 97.1 | 210 |
| Example 31 | Li$_6$PS$_5$Cl | 80 | Xanthan Gum | 20 | 99 | | 1 | | 100 | 10 | 97.1 | 210 |
| Example 32 | Li$_6$PS$_5$Cl | 80 | Xanthan Gum | 20 | 99 | | 1 | | 100 | 5 | 97.5 | 215 |
| Example 33 | Li$_6$PS$_5$Cl | 80 | Xanthan Gum | 20 | 99 | | 1 | | 100 | 20 | 96.8 | 192 |
| Example 34 | Li$_6$PS$_5$Cl | 80 | Xanthan Gum | 20 | 99 | | 1 | | 100 | 25 | 96.6 | 186 |

| | Sulfide electrolyte material | | Polymer particles | | | | | | | | | |
|---|---|---|---|---|---|---|---|---|---|---|---|---|
| | | | | | Proportion of size distribution interval (wt%) | | | | Performance | | | |
| | Type | Converted parts by mass | Type | Converted parts by mass | 5-20 μm | 2-5 μm 20-100 μm | 1-2 μm 100-500 μm | 0.5-1 μm 500-2,000 μm | Degree of polymerization (10,000) | Length-diameter ratio | Compacted density (%) | Breaking strength (MPa) |
| Example 35 | $Li_6PS_5Cl$ | 80 | Xanthan Gum | 20 | 99 | 1 | | | 100 | 50 | 96.2 | 177 |
| Example 36 | $Li_6PS_5Cl$ | 80 | Xanthan Gum | 20 | 99 | 1 | | | 100 | 100 | 95.7 | 165 |
| Comparative example 1 | $Li_6PS_5Cl$ | 80 | Xanthan Gum | 20 | 30 | 25 | 25 | 20 | 100 | 10 | 97.1 | 210 |
| Comparative example 2 | $Li_6PS_5Cl$ | 99.9 | Xanthan Gum | 0.1 | 99 | 1 | | | 100 | 10 | 97.1 | 210 |
| Comparative example 3 | $Li_6PS_5Cl$ | 30 | Xanthan Gum | 70 | 99 | 1 | | | 100 | 10 | 97.1 | 210 |
| Comparative example 4 | $Li_6PS_5Cl$ | 80 | Polyvin yl alcohol | 20 | 99 | 1 | | | 100 | 10 | 95.5 | 32 |
| Comparative example 5 | $Li_6PS_5Cl$ | 80 | Polypro pylene glycol | 20 | 99 | 1 | | | 100 | 10 | 96.1 | 20 |
| Comparative example 6 | $Li_6PS_5Cl$ | 80 | Polyphe nylene sulfide | 20 | 99 | 1 | | | 100 | 10 | 91 | 175 |
| Comparative example 7 | $Li_6PS_5Cl$ | 80 | Polylact ic acid | 20 | 99 | 1 | | | 100 | 10 | 84 | 193 |
| Comparative example 8 | $Li_6PS_5Cl$ | 100 | / | / | / | / | / | / | / | / | / | / |
| Comparative example 9 | $Li_6PS_5Cl$ | 100 | / | / | / | / | / | / | / | / | / | / |

14

EP 4 148 850 A1

| | Sulfide electrolyte material | | Polymer particles | | | | | | | | | | |
|---|---|---|---|---|---|---|---|---|---|---|---|---|---|
| | | | | | Proportion of size distribution interval (wt%) | | | | Performance | | | | |
| | Type | Convert ed parts by mass | Type | Convert ed parts by mass | 5-20 $\mu$m | 2-5 $\mu$m 20-100 $\mu$m | 1-2 $\mu$m 100-500 $\mu$m | 0.5-1 $\mu$m 500-2,000 $\mu$m | Degree of polymerizat ion (10,000) | Length-diameter ratio | Compact ed density (%) | Breaking strength (MPa) |
| Comparative example 10 | $Li_3PS_4$ | 100 | / | / | / | / | / | / | / | / | / | / |
| Comparative example 11 | $Li_7P_3S_{11}$ | 100 | / | / | / | / | / | / | / | / | / | / |
| Comparative example 12 | $Li_{10}GeP_2S_{12}$ | 100 | / | / | / | / | / | / | / | / | / | / |

EP 4 148 850 A1

Table 2.1 Test results of relevant performance of solid batteries in examples and comparative examples

| | Thickness of solid electrolyte membrane (μm) | Performance of solid electrolyte membrane | | | | Performance of solid battery | | |
|---|---|---|---|---|---|---|---|---|
| | | Maximum tensile strain (%) | Compacted density (%) | Electrical conductivity (mS/cm) | Breaking strength (MPa) | Capacity utilization (mAh/g) | Cycle number | Energy density (Wh/kg) |
| Example 1 | 200 | 5.2 | 87 | 0.94 | 87 | 139 | 181 | 204 |
| Example 2 | 200 | 5.2 | 90 | 1 | 105 | 142 | 234 | 209 |
| Example 3 | 200 | 5.4 | 94 | 1.1 | 117 | 145 | 358 | 213 |
| Example 4 | 200 | 5.7 | 97 | 1.2 | 133 | 149 | 503 | 219 |
| Example 5 | 200 | 3.5 | 98 | 1.7 | 46 | 152 | 108 | 224 |
| Example 6 | 200 | 3.9 | 98 | 1.6 | 81 | 140 | 196 | 206 |
| Example 7 | 200 | 4.5 | 97 | 1.4 | 108 | 152 | 347 | 223 |
| Example 8 | 200 | 6.6 | 96 | 0.82 | 147 | 132 | 382 | 194 |
| Example 9 | 200 | 7.2 | 95 | 0.45 | 163 | 120 | 348 | 177 |
| Example 10 | 200 | 6.5 | 97 | 1.2 | 37 | 147 | 101 | 216 |
| Example 11 | 200 | 5.9 | 96 | 1.2 | 43 | 150 | 109 | 220 |
| Example 12 | 200 | 5.6 | 96 | 1.1 | 79 | 149 | 168 | 219 |
| Example 13 | 200 | 5.4 | 97 | 1.2 | 117 | 148 | 366 | 217 |
| Example 14 | 200 | 5.2 | 93 | 0.99 | 115 | 138 | 410 | 202 |
| Example 15 | 200 | 4.9 | 89 | 0.86 | 102 | 134 | 376 | 197 |
| Example 16 | 200 | 4.4 | 86 | 0.78 | 96 | 119 | 227 | 165 |
| Example 17 | 200 | 5.7 | 97 | 0.52 | 137 | 123 | 486 | 180 |
| Example 18 | 200 | 5.3 | 98 | 1.7 | 131 | 153 | 453 | 225 |
| Example 19 | 200 | 5.5 | 98 | 3.2 | 130 | 155 | 422 | 228 |
| Example 20 | 200 | 5.1 | 96 | 1.1 | 142 | 147 | 491 | 216 |
| Example 21 | 200 | 6.2 | 96 | 1.1 | 119 | 148 | 388 | 217 |
| Example 22 | 200 | 7.7 | 97 | 0.81 | 114 | 136 | 436 | 200 |
| Example 23 | 200 | 7.1 | 95 | 0.89 | 110 | 130 | 405 | 191 |

| | Thickness of solid electrolyte membrane (μm) | Performance of solid electrolyte membrane | | | | Performance of solid battery | | |
|---|---|---|---|---|---|---|---|---|
| | | Maximum tensile strain (%) | Compacted density (%) | Electrical conductivity (mS/cm) | Breaking strength (MPa) | Capacity utilization (mAh/g) | Cycle number | Energy density (Wh/kg) |
| Example 24 | 200 | 5.2 | 96 | 0.66 | 101 | 122 | 254 | 179 |
| Example 25 | 200 | 5.6 | 95 | 0.69 | 87 | 124 | 197 | 182 |
| Example 26 | 200 | 7.5 | 96 | 0.51 | 105 | 117 | 265 | 172 |
| Example 27 | 200 | 6.9 | 94 | 0.45 | 83 | 112 | 178 | 165 |
| Example 28 | 20 | 5.7 | 97 | 1.2 | 133 | 149 | 116 | 310 |
| Example 29 | 30 | 5.7 | 97 | 1.2 | 133 | 149 | 165 | 303 |
| Example 30 | 50 | 5.7 | 97 | 1.2 | 133 | 149 | 184 | 284 |
| Example 31 | 100 | 5.7 | 97 | 1.2 | 133 | 149 | 275 | 255 |
| Example 32 | 200 | 5.2 | 97 | 1.2 | 136 | 148 | 494 | 218 |
| Example 33 | 200 | 6.3 | 95 | 1.1 | 108 | 145 | 385 | 213 |
| Example 34 | 200 | 6.6 | 93 | 1.1 | 81 | 141 | 323 | 207 |
| Example 35 | 200 | 7.4 | 92 | 1.05 | 70 | 138 | 205 | 203 |
| Example 36 | 200 | 8.8 | 90 | 0.96 | 56 | 137 | 177 | 201 |
| Comparative example 1 | 200 | 5.1 | 84 | 0.88 | 79 | 137 | 96 | 202 |
| Comparative example 2 | 200 | 3.4 | 99 | 1.8 | 24 | 154 | 56 | 226 |
| Comparative example 3 | 200 | 7.9 | 96 | 0.14 | 173 | 106 | 311 | 156 |
| Comparative example 4 | 200 | 7.5 | 92 | 0.75 | 24 | 127 | 41 | 187 |
| Comparative example 5 | 200 | 7.9 | 91 | 0.68 | 21 | 122 | 38 | 179 |

(continued)

| | Thickness of solid electrolyte membrane ($\mu$m) | Performance of solid electrolyte membrane | | | | Performance of solid battery | | |
|---|---|---|---|---|---|---|---|---|
| | | Maximum tensile strain (%) | Compacted density (%) | Electrical conductivity (mS/cm) | Breaking strength (MPa) | Capacity utilization (mAh/g) | Cycle number | Energy density (Wh/kg) |
| Comparative example 6 | 200 | 5.4 | 85 | 0.44 | 31 | 110 | 55 | 162 |
| Comparative example 7 | 200 | 4.8 | 79 | 0.28 | 34 | 96 | 59 | 141 |
| Comparative example 8 | 30 | 3.4 | 99 | 1.8 | 21 | 155 | 9 | 315 |
| Comparative example 9 | 200 | 3.4 | 99 | 1.8 | 21 | 155 | 54 | 228 |
| Comparative example 10 | 200 | 3.6 | 99 | 0.75 | 24 | 139 | 61 | 204 |
| Comparative example 11 | 200 | 3.2 | 99 | 2.7 | 18 | 156 | 52 | 229 |
| Comparative example 12 | 200 | 5.5 | 98 | 4.5 | 26 | 158 | 40 | 232 |

The only difference between Examples 1 to 4 and Comparative example 1 lies in the size distribution of the polymer particles. Examples 1 to 4 satisfy a condition that no less than 90 wt% of the polymer particles have a size of 1 $\mu$m to 500 $\mu$m, while Comparative example 1 does not satisfy a condition that no less than 90 wt% of the polymer particles have a size of 1 $\mu$m to 500 $\mu$m (20 wt% of the polymer particles have a size not in a range of 1 $\mu$m to 500 $\mu$m). It can be seen from comparisons between Examples 1 to 4 and Comparative example 1 that, the solid electrolyte membranes of Examples 1 to 4 have higher electrical conductivity and breaking strength, and the cycle number of the battery is significantly increased. It can be seen from comparisons between Examples 1 to 4 that, when the polymer particles are concentrated towards 5 $\mu$m to 20 $\mu$m, the electrical conductivity and breaking strength of the solid electrolyte membrane and the cycle number of the battery can be further improved. Particularly, in Example 4, when no less than 99 wt% of the polymer particles have a size of 5 $\mu$m to 20 $\mu$m, the electrical conductivity and breaking strength of the solid electrolyte membrane and the cycle number of the battery are all significantly improved.

The only difference between Examples 4 to 9 and Comparative examples 2 to 3 is a difference in the content of the polymer particles. It can be seen from comparisons between Examples 4 to 9 and Comparative examples 2 to 3 that, the content of the polymer particles has a significant impact on the electrical conductivity of the electrolyte membrane and the capacity utilization, cycle number and energy density of the battery. In Examples 4 to 9, the converted parts by mass of the polymer particles are 1 to 50 parts, and the electrical conductivity of the electrolyte membrane and the capacity utilization, cycle number and energy density of the battery are all high; in Comparative example 2, the converted parts by mass of the polymer particles are lower than 1, and the breaking strength of the solid electrolyte membrane and the cycle number of the battery are both low; and in Comparative example 3, the converted parts by mass of the polymer particles are higher than 50, and the electrical conductivity of the solid electrolyte membrane and the energy density are both low. It can be seen from comparisons between Examples 4 to 9 that, when the converted parts by mass of the polymer particles are increased from 1 part to 20 parts, the cycle number of the battery is significantly increased while the electrical conductivity of the solid electrolyte membrane and the capacity utilization of the battery are kept high; herein, when the content of the polymer particles is 5 parts by mass or more, particularly 10 parts by mass or more, a high cycle number of the battery is guaranteed. When the converted parts by mass of the polymer particles are decreased from 50 to 35, the electrical conductivity of the solid electrolyte membrane and the capacity utilization of the battery are significantly improved while the cycle number of the battery is kept high. When the converted parts by mass of the polymer particles are decreased from 35 to 20, the cycle number of the battery is also significantly increased while the electrical conductivity of the solid electrolyte membrane and the capacity utilization of the battery are significantly improved.

The only difference between Example 4 and Examples 10 to 16 is a difference in the degree of polymerization of the polymer particles. It can be seen from comparisons between Example 4 and Examples 10 to 16 that, the degree of polymerization of the polymer particles has a significant impact on the compacted density and breaking strength of the polymer particles after compaction, and thus has a significant impact on the electrical conductivity and breaking strength of the solid electrolyte membrane and the capacity utilization, cycle number and energy density of the battery. In Example 10, the degree of polymerization of the polymer particles is lower than 100,000, the breaking strength of the polymer particles after compaction is low, and the breaking strength of the solid electrolyte membrane and the cycle number of the battery are significantly reduced. In Example 16, the degree of polymerization of the polymer particles is higher than 5 million, and the breaking strength of the polymer particles after compaction is low, and the electrical conductivity and breaking strength of the solid electrolyte membrane and the capacity utilization, cycle number and energy density of the battery are all significantly reduced.

The only difference between Example 4 and Examples 17 to 19 is a difference in the type of the sulfide electrolyte material. It can be seen from comparison between Example 4 and Examples 17 to 19 that, in the embodiments of the present application, when the sulfide electrolyte material is $Li_6PS_5Cl$, $Li_3PS_4$, $Li_7P_3S_{11}$ or $Li_{10}GeP_2S_{12}$, the battery shows better performance in terms of capacity utilization, cycle number and energy density.

The only difference between Example 4, Examples 20 to 27 and Comparative examples 4 to 7 is a difference in the material type of the polymer particles. In Comparative examples 4 to 5, the breaking strength of the polymer particles after compression-molding does not meet the condition of being higher than 50 MPa. It can be seen from comparisons between Example 4 and Comparative examples 4 to 5 that, in Example 4, the electrical conductivity and breaking strength of the solid electrolyte membrane are significantly improved such that the capacity utilization and energy density of the battery are higher, and the cycle number of the battery is significantly increased. In Comparative examples 6 to 7, the compacted density of the polymer particles after compression-molding does not meet the condition of being greater than 95%. In Example 4, the electrical conductivity and breaking strength of the solid electrolyte membrane are significantly improved, and thus the capacity utilization, cycle number and energy density of the battery are significantly improved. It can be seen from comparisons between Example 4 and Examples 20 to 27 that, when the polymer particles are polysaccharide polymers, polyhydrocarbon polymers, rubber polymers, polyamide polymers or polyester polymers, the battery shows better performance in terms of capacity utilization, cycle number and energy density. Herein, when the polymer particles contain a polar functional group, compared with those not containing a polar functional group, the capacity utilization and life cycle of the battery can be better improved; and particularly, when the polymer is a saccharide polymer, the solid electrolyte membrane has better electrical conductivity and breaking strength, such that the performance of the battery in terms of capacity utilization, cycle number and energy density is obviously better.

The only difference between Example 4 and Examples 28 to 31 is a difference in the thickness of the solid electrolyte membrane. It can be seen from comparisons between Example 4 and Examples 28 to 31 that, in the case that the solid electrolyte membrane is only composed of a sulfide electrolyte material and polymer particles, when the solid electrolyte membrane has a thickness of 100 $\mu$m or more, the cycle number of the battery is significantly higher; and when the solid electrolyte membrane has a thickness of 100 $\mu$m or less, particularly 50 $\mu$m or less, the energy density of the battery is significantly higher.

The only difference between Example 4 and Examples 32 to 36 is a difference in the aspect ratio of the polymer particles. It can be seen from comparisons between Example 4 and Examples 32 to 36 that, in the case that the solid electrolyte membrane is only composed of a sulfide electrolyte material and polymer particles, in Example 4 and Examples 32 to 35, when the polymer particles have an aspect ratio controlled within 50, and in an exemplary embodiment, within 25, particularly within 20, the battery shows good performance in terms of capacity utilization, cycle number and energy density. In Example 36, the aspect ratio of the polymer particles exceeds 50, and the cycle number of the battery is significantly reduced.

The only difference between Example 4 and Comparative example 8 lies in whether the solid electrolyte membrane contains polymer particles. The only difference between Example 29 and Comparative example 9 lies in whether the solid electrolyte membrane contains polymer particles. The only difference between Example 17 and Comparative example 10 lies in whether the solid electrolyte membrane contains polymer particles. The only difference between Example 18 and Comparative example 11 lies in whether the solid electrolyte membrane contains polymer particles. The only difference between Example 19 and Comparative example 12 lies in whether the solid electrolyte membrane contains polymer particles. It can be seen from a comparison between Example 4 and Comparative example 8 and a comparison between Example 29 and Comparative example 9 that, when the solid electrolyte membranes of different thickness specifications are used, if the sulfide electrolyte material is used alone as the raw material of the solid electrolyte membrane, although the battery can obtain good capacity utilization and energy density, the cycle number of the battery is significantly reduced. It can be seen from a comparison between Example 4 and Comparative example 8, a comparison between Example 17 and Comparative example 10, a comparison between Example 18 and Comparative example 11 and a comparison between Example 19 and Comparative example 12 that, when the solid electrolyte membrane uses different sulfide electrolyte materials, if the sulfide electrolyte material is used alone as the raw material of the solid electrolyte membrane, although the battery can obtain good capacity utilization and energy density, the cycle number of the battery is significantly reduced.

Table 1.2 Compositions of solid electrolyte membranes in examples and Comparative examples

| | Sulfide electrolyte material | | Polymer particles | | | | | | | | | | | Binder | |
|---|---|---|---|---|---|---|---|---|---|---|---|---|---|---|---|
| | | | | | Proportion of size distribution interval (wt%) | | | | Performance | | | | | | |
| | Type | Converted parts by mass | Type | Converted paits by mass | 5-20 μm | 2-5 μm / 20-100 μm | 1-2 μm / 100-500 μm | 0.5-1 μm / 500-2,000 μm | Degree of polymer ization (10,000) | Lengt h-diame ter ratio | Compa cted density (%) | Break ing streng th (MPa ) | | Type | Converted parts by mass |
| Exam pl e 37 | Li$_6$PS$_5$Cl | 80 | Xanthan Gu m | 20 | 99 | 1 | | | 100 | 10 | 97.1 | 210 | | Styrene butadie he rubber | 0.1 |
| Exam pl e 38 | Li$_6$PS$_5$Cl | 80 | Xanthan Gu m | 20 | 99 | 1 | | | 100 | 10 | 97.1 | 210 | | Styrene butadie he rubber | 0.5 |
| Exam pl e 39 | Li$_6$PS$_5$Cl | 80 | Xanthan Gu m | 20 | 99 | 1 | | | 100 | 10 | 97.1 | 210 | | Styrene butadie ne rubber | 1 |
| Exam pl e 40 | Li$_6$PS$_5$Cl | 80 | Xanthan Gu m | 20 | 99 | 1 | | | 100 | 10 | 97.1 | 210 | | Styrene butadie ne rubber | 2 |
| Exam pl e 41 | Li$_6$PS$_5$Cl | 80 | Xanthan Gu m | 20 | 99 | 1 | | | 100 | 10 | 97.1 | 210 | | Styrene butadie ne rubber | 5 |
| Exam pl e 42 | Li$_6$PS$_5$Cl | 80 | Xanthan Gu m | 20 | 99 | 1 | | | 100 | 10 | 97.1 | 210 | | Styrene butadie ne rubber | 10 |
| Exam pl e 43 | Li$_6$PS$_5$Cl | 80 | Xanthan Gu m | 20 | 99 | 1 | | | 100 | 10 | 97.1 | 210 | | Styrene butadie ne rubber | 20 |
| Exam pl e 44 | Li$_6$PS$_5$Cl | 80 | Xanthan Gu m | 20 | 99 | 1 | | | 100 | 10 | 97.1 | 210 | | Styrene butadie ne rubber | 30 |
| Exam pl e 45 | Li$_6$PS$_5$Cl | 80 | Xanthan Gu m | 20 | 99 | 1 | | | 100 | 10 | 97.1 | 210 | | Styrene butadie ne rubber | 5 |

(continued)

| | Sulfide electrolyte material | | Polymer particles | | | | | | Performance | | | | Binder | |
|---|---|---|---|---|---|---|---|---|---|---|---|---|---|---|
| | | | | | Proportion of size distribution interval (wt%) | | | | | | | | | |
| | Type | Converted parts by mass | Type | Converted paits by mass | 5-20 $\mu$m | 2-5 $\mu$m 20-100 $\mu$m | 1-2 $\mu$m 100-500 $\mu$m | 0.5-1 $\mu$m 500-2,000 $\mu$m | Degree of polymer ization (10,000) | Lengt h-diame ter ratio | Compa cted density (%) | Break ing streng th (MPa ) | Type | Converted parts by mass |
| Exam pl e 46 | Li$_6$PS$_5$Cl | 80 | Xanthan Gu m | 20 | 99 | 1 | | | 100 | 10 | 97.1 | 210 | Styrene butadie ne rubber | 5 |
| Exam pl e 47 | Li$_6$PS$_5$Cl | 80 | Xanthan Gu m | 20 | 99 | 1 | | | 100 | 10 | 97.1 | 210 | Styrene butadie ne rubber | 5 |
| Exam pl e 48 | Li$_6$PS$_5$Cl | 80 | Xanthan Gu m | 20 | 99 | 1 | | | 100 | 10 | 97.1 | 210 | Styrene butadie ne rubber | 5 |
| Exam pl e 49 | Li$_6$PS$_5$Cl | 80 | Xanthan Gu m | 20 | 99 | 1 | | | 100 | 10 | 97.1 | 210 | Styrene butadie ne rubber | 5 |
| Exam pl e 50 | Li$_6$PS$_5$Cl | 80 | Xanthan Gu m | 20 | 99 | 1 | | | 100 | 10 | 97.1 | 210 | Polyiso butylen e | 5 |
| Exam pl e 51 | Li$_6$PS$_5$Cl | 80 | Xanthan Gu m | 20 | 99 | 1 | | | 100 | 10 | 97.1 | 210 | Polyeth ylene oxide | 5 |
| Exam pl e 52 | Li$_6$PS$_5$Cl | 80 | Xanthan Gu m | 20 | 99 | 1 | | | 100 | 10 | 97.1 | 210 | Polyvi nyliden e fluorid e | 5 |
| Exam pl e 53 | Li$_6$PS$_5$Cl | 80 | Xanthan Gu m | 20 | 99 | 1 | | | 100 | 5 | 97.5 | 215 | Styrene butadie ne rubber | 5 |
| Exam pl e 54 | Li$_6$PS$_5$Cl | 80 | Xanthan Gu m | 20 | 99 | 1 | | | 100 | 20 | 96.8 | 192 | Styrene butadie ne rubber | 5 |

(continued)

| | Sulfide electrolyte material | | Polymer particles | | | | | | Performance | | | | Binder | |
|---|---|---|---|---|---|---|---|---|---|---|---|---|---|---|
| | | | | | Proportion of size distribution interval (wt%) | | | | | | | | | |
| | Type | Converted parts by mass | Type | Converted paits by mass | 5-20 μm 20-100 μm | 2-5 μm 100-500 μm | 1-2 μm 500-2,000 μm | 0.5-1 μm | Degree of polymer ization (10,000) | Length-diameter ratio | Compacted density (%) | Breaking strength (MPa) | Type | Converted parts by mass |
| Example 55 | Li$_6$PS$_5$Cl | 80 | Xanthan Gum | 20 | 99 | 1 | | | 100 | 25 | 96.6 | 186 | Styrene butadiene rubber | 5 |
| Example 56 | Li$_6$PS$_5$Cl | 80 | Xanthan Gum | 20 | 99 | 1 | | | 100 | 50 | 96.2 | 177 | Styrene butadiene rubber | 5 |
| Example 57 | Li$_6$PS$_5$Cl | 80 | Xanthan Gum | 20 | 99 | 1 | | | 100 | 100 | 95.7 | 165 | Styrene butadiene rubber | 5 |
| Comparative example 13 | Li$_6$PS$_5$Cl | 100 | / | / | / | / | / | / | / | / | / | / | Styrene butadiene rubber | 5 |
| Comparative example 14 | Li$_6$PS$_5$Cl | 100 | / | / | / | / | / | / | / | / | / | / | Styrene butadiene rubber | 5 |
| Comparative example 15 | Li$_6$PS$_5$Cl | 100 | / | / | / | / | / | / | / | / | / | / | Styrene butadiene rubber | 20 |

(continued)

| | Sulfide electrolyte material | | Polymer particles | | | | | | | Performance | | | Binder | |
|---|---|---|---|---|---|---|---|---|---|---|---|---|---|---|
| | Type | Converted parts by mass | Type | Converted parts by mass | Proportion of size distribution interval (wt%) | | | | Degree of polymerization (10,000) | Length-diameter ratio | Compacted density (%) | Breaking strength (MPa) | Type | Converted parts by mass |
| | | | | | 5-20 μm | 2-5 μm 20-100 μm | 1-2 μm 100-500 μm | 0.5-1 μm 500-2,000 μm | | | | | | |
| Comparative example 16 | Li₆PS₅Cl | 100 | / | / | / | / | / | / | / | / | / | / | Styrene butadiene rubber | 20 |

Table 2.2 Test results of relevant performance of solid batteries in examples and comparative examples

| | Thickness of solid electrolyte membrane ($\mu$m) | Performance of solid electrolyte membrane | | | | Performance of solid battery | | |
|---|---|---|---|---|---|---|---|---|
| | | Maximum tensile strain (%) | Compacted density (%) | Electrical conductivity (mS/cm) | Breaking strength (MPa) | Capacity utilization (mAh/g) | Cycle number | Energy density (Wh/kg) |
| Example 37 | 30 | 6.4 | 97 | 1.2 | 134 | 148 | 173 | 301 |
| Example 38 | 30 | 7.8 | 96 | 1.1 | 135 | 146 | 180 | 297 |
| Example 39 | 30 | 9.5 | 96 | 1 | 136 | 141 | 191 | 287 |
| Example 40 | 30 | 14 | 95 | 0.83 | 138 | 136 | 248 | 276 |
| Example 41 | 30 | 19 | 93 | 0.63 | 138 | 132 | 264 | 268 |
| Example 42 | 30 | 27 | 90 | 0.34 | 139 | 114 | 249 | 232 |
| Example 43 | 30 | 39 | 85 | 0.19 | 135 | 108 | 227 | 219 |
| Example 44 | 30 | 47 | 79 | 0.08 | 132 | 97 | 203 | 197 |
| Example 45 | 10 | 19 | 93 | 0.63 | 138 | 132 | 105 | 281 |
| Example 46 | 20 | 19 | 93 | 0.63 | 138 | 132 | 151 | 274 |
| Example 47 | 50 | 19 | 93 | 0.63 | 138 | 132 | 296 | 252 |
| Example 48 | 100 | 19 | 93 | 0.63 | 138 | 132 | 353 | 226 |
| Example 49 | 200 | 19 | 93 | 0.63 | 138 | 132 | 521 | 194 |
| Example 50 | 30 | 11 | 94 | 0.76 | 133 | 137 | 207 | 278 |
| Example 51 | 30 | 22 | 92 | 0.44 | 137 | 121 | 258 | 246 |
| Example 52 | 30 | 24 | 93 | 0.52 | 136 | 124 | 246 | 252 |
| Example 53 | 30 | 18 | 93 | 0.67 | 141 | 133 | 279 | 270 |
| Example 54 | 30 | 20 | 92 | 0.57 | 114 | 132 | 231 | 268 |
| Example 55 | 30 | 21 | 89 | 0.49 | 85 | 129 | 210 | 262 |
| Example 56 | 30 | 23 | 87 | 0.47 | 67 | 127 | 133 | 258 |
| Example 57 | 30 | 25 | 85 | 0.45 | 59 | 126 | 108 | 256 |
| Comparative example 13 | 200 | 17 | 95 | 1.1 | 23 | 144 | 58 | 212 |

| | Thickness of solid electrolyte membrane (μm) | Performance of solid electrolyte membrane | | | | Performance of solid battery | | |
|---|---|---|---|---|---|---|---|---|
| | | Maximum tensile strain (%) | Compacted density (%) | Electrical conductivity (mS/cm) | Breaking strength (MPa) | Capacity utilization (mAh/g) | Cycle number | Energy density (Wh/kg) |
| Comparative example 14 | 30 | 17 | 95 | 1.1 | 23 | 144 | 17 | 293 |
| Comparative example 15 | 200 | 35 | 86 | 0.31 | 25 | 117 | 64 | 172 |
| Comparative example 16 | 30 | 35 | 86 | 0.31 | 25 | 117 | 22 | 238 |

The only difference between Example 29 and Examples 37 to 44 lies in that: the solid electrolyte membranes of Examples 37 to 44 also comprise a binder, and the binders of Examples 37 to 44 have different amounts. It can be seen from comparisons between Example 29 and Examples 37 to 44 that, adding a binder properly into the solid electrolyte membrane is beneficial in increasing the cycle number of the battery. It can be seen from comparisons between Examples 37 to 44 that, when the converted parts by mass of the binder are less than 0.5 part, the cycle number of the battery is low; and when the converted parts by mass of the binder exceed 20 parts, the electrical conductivity of the solid electrolyte membrane is extremely low, and the capacity utilization, cycle number and energy density of the battery are all low. When the converted parts by mass of the binder are 1 part or more, particularly 2 parts or more, the cycle number of the battery is high; and when the converted parts by mass of the binder are 10 parts or less, particularly 5 parts or less, it is ensured that the solid electrolyte membrane has good electrical conductivity and the battery has high energy utilization.

The only difference between Example 41 and Examples 50 to 52 is a difference in the thickness of the solid electrolyte membrane. It can be seen from comparisons between Example 41 and Examples 50 to 52 that, in the case that the solid electrolyte membrane also comprises a binder, when the solid electrolyte membrane has a thickness of 30 $\mu$m or more, the cycle number of the battery is obviously higher; and when the solid electrolyte membrane has a thickness of 100 $\mu$m or less, particularly 50 $\mu$m or less, the energy density of the battery is obviously higher, but when the solid electrolyte membrane has a thickness of less than 20 $\mu$m, the cycle number of the battery is too low. When the solid electrolyte membrane has a thickness of 20 $\mu$m to 200 $\mu$m, particularly when the solid electrolyte membrane has a thickness of 30 $\mu$m to 50 $\mu$m, the battery can have both a high cycle number and a high energy density.

The only difference between Example 41 and Examples 53 to 57 is a difference in the aspect ratio of the polymer particles. It can be seen from comparisons between Example 41 and Examples 53 to 57 that, in the case that the solid electrolyte membrane also comprises a binder, in Example 49 and Examples 53 to 56, when the polymer particles have an aspect ratio controlled within 50, and in an exemplary embodiment, within 25, particularly within 20, the battery shows good performance in terms of capacity utilization, cycle number and energy density. In Example 57, the aspect ratio of the polymer particles exceeds 50, and the cycle number of the battery is significantly reduced.

The only difference between Example 41 and Comparative example 13 lies in whether the solid electrolyte membrane contains polymer particles. The only difference between Example 49 and Comparative example 14 lies in whether the solid electrolyte membrane contains polymer particles. The only difference between Comparative example 13 and Comparative example 15 lies in the content of the binder in the solid electrolyte membrane, and the only difference between Comparative example 14 and Comparative example 16 lies in the content of the binder in the solid electrolyte membrane. It can be seen from a comparison between Example 41 and Comparative example 13 and a comparison between Example 49 and Comparative example 14 that, in the case of not adding polymer particles, when solid electrolyte membranes of different thickness specifications are used, although adding the binder into the solid electrolyte membrane can improve the maximum tensile strain of the solid electrolyte membrane, the breaking strength of the solid electrolyte membrane and the cycle number of the battery are both significantly reduced. It can be seen from a comparison between Comparative Example 13 and Comparative example 15 and a comparison between Comparative Example 14 and Comparative example 16 that, in the case of not adding polymer particles, even if the amount of the binder is increased in the solid electrolyte membrane, although the binder added into the solid electrolyte membrane can improve the maximum tensile strain of the solid electrolyte membrane, the breaking strength of the solid electrolyte membrane and the cycle number of the battery cannot be significantly improved.

The embodiments described above are some, not all of the embodiments of the present application. The detailed description of the embodiments of the present application is not intended to limit the scope of protection of the present application as claimed, but is merely representative of the selected embodiments of the present application. All other embodiments obtained by those of ordinary skill in the art based on the embodiments of the present application without any creative effort shall fall within the scope of protection of the present application.

**Claims**

1. A solid electrolyte membrane, comprising a sulfide electrolyte material and polymer particles dispersed in the sulfide electrolyte material, wherein

   based on the total mass of the sulfide electrolyte material and the polymer particles being 100 parts by mass, the mass of the polymer particles is 1 to 50 parts by mass;
   no less than 90 wt% of the polymer particles have a size of 1 $\mu$m to 500 $\mu$m, and optionally no less than 35 wt% of the polymer particles have a size of 5 $\mu$m to 20 $\mu$m; and
   after the polymer particles are compression-molded under the conditions of 100 MPa to 500 MPa, the compacted density is greater than 95% and the breaking strength is higher than 50 MPa.

2. The solid electrolyte membrane according to claim 1, wherein no less than 99 wt% of the polymer particles have a size of 1 $\mu$m to 500 $\mu$m, and optionally no less than 40 wt% of the polymer particles have a size of 5 $\mu$m to 20 $\mu$m; and optionally, no more than 99 wt% of the polymer particles have a size of 5 $\mu$m to 20 $\mu$m.

3. The solid electrolyte membrane according to claim 1 or 2, wherein the polymer particles have an aspect ratio within 50, optionally within 25, and more optionally within 20.

4. The solid electrolyte membrane according to any one of claims 1 to 3, wherein the polymer particles are selected from one or more of polysaccharide polymers, polyhydrocarbon polymers, rubber polymers, polyamide polymers and polyester polymers.

5. The solid electrolyte membrane according to any one of claims 1 to 4, wherein the polymer particles contain a polar functional group selected from one or more of a hydroxyl group, a carboxyl group and a cyano group.

6. The solid electrolyte membrane according to any one of claims 1 to 5, wherein the polymer particles are polysaccharide polymers, and optionally one or more of xanthan gum, guar gum, gum arabic, starch, cellulose, glycogen, chitin, agar and inulin.

7. The solid electrolyte membrane according to any one of claims 1 to 6, wherein the polymer particles have a degree of polymerization of 100,000 to 5 million, and optionally 200,000 to 2 million.

8. The solid electrolyte membrane according to any one of claims 1 to 7, wherein the sulfide electrolyte material is selected from one or more of $Li_3PS_4$, $Li_7P_3S_{11}$, $Li_6PS_5Cl$ and $Li_{10}GeP_2S_{12}$.

9. The solid electrolyte membrane according to any one of claims 1 to 8, further comprising a binder, wherein based on the total mass of the sulfide electrolyte material and the polymer particles being 100 parts by mass, the mass of the binder is 0.5 to 20 parts by mass, optionally 1 to 10 parts by mass, and more optionally 2 to 5 parts by mass.

10. The solid electrolyte membrane according to any one of claims 1 to 9, wherein the solid electrolyte membrane has a thickness of 20 $\mu$m to 200 $\mu$m.

11. A solid battery, comprising a solid electrolyte membrane according to any one of claims 1 to 10.

12. A battery module, comprising a solid battery according to claim 11.

13. A battery pack, comprising a battery module according to claim 12.

14. A power consuming device, comprising a solid battery according to claim 11 or a battery module according to claim 12 or a battery pack according to claim 13.

FIG. 1

| INTERNATIONAL SEARCH REPORT | International application No. |
|---|---|
| | **PCT/CN2021/126498** |

**A. CLASSIFICATION OF SUBJECT MATTER**

H01M 10/0565(2010.01)i; H01M 10/0562(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, CNKI, CNABS, DWPI, SIPOABS: 电池, 电解质, 固体, 固态, 硫, 聚合物, 断裂强度, 粒径, battery, solid, sulfur, polymer, diameter, particle, strength

**C. DOCUMENTS CONSIDERED TO BE RELEVANT**

| Category* | Citation of document, with indication, where appropriate, of the relevant passages | Relevant to claim No. |
|---|---|---|
| Y | CN 107710455 A (QUANTUMSCAPE CORP.) 16 February 2018 (2018-02-16) description, paragraphs 0067-0246 | 1-14 |
| Y | CN 110192302 A (LG CHEMICAL LTD.) 30 August 2019 (2019-08-30) description, paragraphs 0005-0070 | 1-14 |
| A | CN 109786816 A (XI'AN JIAOTONG UNIVERSITY) 21 May 2019 (2019-05-21) entire document | 1-14 |
| A | CN 107492681 A (SHANGHAI NAXIAO ENERGY TECHNOLOGY CO., LTD.) 19 December 2017 (2017-12-19) entire document | 1-14 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **17 December 2021** | **19 January 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/126498**

| Patent document cited in search report | | | Publication date (day/month/year) | Patent family member(s) | | | Publication date (day/month/year) |
|---|---|---|---|---|---|---|---|
| CN | 107710455 | A | 16 February 2018 | EP | 3314681 | A4 | 06 March 2019 |
| | | | | US | 2020067137 | A1 | 27 February 2020 |
| | | | | US | 10374254 | B2 | 06 August 2019 |
| | | | | KR | 20180021797 | A | 05 March 2018 |
| | | | | WO | 2016210371 | A1 | 29 December 2016 |
| | | | | US | 2017005367 | A1 | 05 January 2017 |
| | | | | EP | 3314681 | A1 | 02 May 2018 |
| | | | | JP | 2018521173 | A | 02 August 2018 |
| | | | | EP | 3314681 | B1 | 21 July 2021 |
| | | | | US | 11145898 | B2 | 12 October 2021 |
| CN | 110192302 | A | 30 August 2019 | US | 2019372149 | A1 | 05 December 2019 |
| | | | | KR | 20180125407 | A | 23 November 2018 |
| | | | | EP | 3553868 | A4 | 20 November 2019 |
| | | | | EP | 3553868 | A1 | 16 October 2019 |
| | | | | WO | 2018212568 | A1 | 22 November 2018 |
| | | | | KR | 102178714 | B1 | 13 November 2020 |
| | | | | JP | 2020509565 | A | 26 March 2020 |
| CN | 109786816 | A | 21 May 2019 | None | | | |
| CN | 107492681 | A | 19 December 2017 | None | | | |

Form PCT/ISA/210 (patent family annex) (January 2015)

**REFERENCES CITED IN THE DESCRIPTION**

**Patent documents cited in the description**

- CN 2020116439673